# FASCICULE DE BREVET EUROPEEN

(11) **EP 3 725 002 B1**
(45) Date de publication et mention de la délivrance du brevet: **14.07.2021**
(21) Numéro de dépôt: 18815233.4
(22) Date de dépôt: 14.12.2018
(51) Int. Cl.: H04B 5/00, G01V 3/10, G01V 3/12, G01V 3/16

(54) **DETECTEUR DOUBLE TECHNOLOGIE A BOBINES TRANSVERSES**
DOPPELDETEKTOR MIT QUERSPULEN
DUAL DETECTOR WITH TRANSVERSE COILS

(30) Priorité: 15.12.2017 FR 1762287
(43) Date de publication de la demande: 21.10.2020
(73) Titulaire: Manneschi, Alessandro, 52100 Arezzo (IT)
(72) Inventeur: Manneschi, Alessandro, 52100 Arezzo (IT)
(74) Mandataire: Regimbeau
(86) Numéro de dépôt international: PCT/EP2018/084936
(87) Numéro de publication internationale: WO 2019/115762

(56) Documents cités:
- WO-A2-2012/024133

## Description

### DOMAINE DE L'INVENTION

L'invention concerne le domaine de la détection d'objets cibles, et plus particulièrement de la détection de charges explosives tels que des mines terrestres enfouies dans le sol.

### ARRIERE-PLAN TECHNOLOGIQUE

Afin de détecter des charges explosives, il est connu d'utiliser des détecteurs double technologies (« dual detector » en anglais) comprenant une tête de détection logeant un capteur inductif et un radar à pénétration de sol, dans la mesure où ces technologies sont complémentaires quant aux types de matériaux détectés (métaux pour le capteur inductif vs. différences de constantes diélectriques des matériaux et position relative pour le radar).

A l'usage, le Demandeur s'est cependant aperçu du fait que le sol n'était pas neutre du point de vue électromagnétique et peut donc perturber le couplage entre les bobinages. En outre, le sol est rarement uniformément magnétique, de sorte que, pendant le balayage du sol avec le détecteur par un opérateur, le signal détecter peut ne varier qu'en raison de la présence de débris métalliques ou de la composition même du sol, voire même déclencher de fausses alarmes.

Par ailleurs, les opérateurs utilisant ces détecteurs peuvent être insuffisamment formés et ne pas tenir correctement le détecteur ou d'effectuer un mouvement de balayage inapproprié. La tête de détection peut alors former un angle latéral avec le sol, de sorte que l'une des bobines se trouve plus proche du sol que l'autre des bobines, ce qui crée une forte modulation du signal et risque donc de déclencher de fausses alarmes. Et quand bien même l'opérateur serait bien formé et essayerait de maintenir la tête de détection sensiblement parallèle au sol en tout point du mouvement de balayage, il ne peut modifier localement son inclinaison pour tenir compte des irrégularités du sol.

Afin de pallier ces difficultés, les fabricants ont tendance à réduire la sensibilité de ces détecteurs. Le risque cependant est de ne plus pouvoir détecter des cibles enfouies dans le sol et donc de mettre en péril la vie des opérateurs.

Le document WO 2012/024133 décrit un détecteur comprenant un capteur inductif formé d'une bobine émettrice et d'une bobine réceptrice et un radar comprenant des antennes en forme V.

### RESUME DE L'INVENTION

Un objectif de l'invention est donc de proposer un détecteur double technologie comprenant une tête de détection logeant un capteur inductif et un autre capteur, tel qu'un radar à pénétration de sol, qui soit capable de réduire les fausses alarmes susceptibles d'être générées lors du balayage d'un sol avec le détecteur tout présentant une sensibilité plus élevée.

Pour cela, l'invention propose un détecteur double technologie comprenant une tête de détection comportant :
- un capteur inductif et
- un radar à pénétration de sol comprenant une antenne émettrice et une antenne réceptrice.

L'antenne émettrice et l'antenne réceptrice présentent une épaisseur inférieure ou égale à un micron afin de limiter les interactions avec le capteur inductif.

Certaines caractéristiques préférées mais non limitatives du détecteur double technologie décrit ci-dessus sont les suivantes, prises individuellement ou en combinaison :
- l'épaisseur de l'antenne émettrice et de l'antenne réceptrice est supérieure ou égale à une centaine de nanomètres.
- l'épaisseur de l'antenne émettrice et de l'antenne réceptrice est égale à 200 nm.
- le capteur inductif comprend une bobine émettrice et une bobine réceptrice distinctes, la bobine émettrice et la bobine réceptrice formant chacune une boucle, et l'antenne émettrice et l'antenne réceptrice sont chacune logées au centre de l'une des boucles des bobines émettrice et réceptrice.
- le capteur inductif comprend une bobine émettrice et une bobine réceptrice distinctes comprenant des fils enroulés, la bobine émettrice présentant un plus grand nombre de spires que la bobine réceptrice.
- le capteur inductif est imprimé directement sur une plateforme de sorte que la plateforme forme un circuit imprimé.
- le capteur inductif comprend une bobine émettrice et une bobine réceptrice distinctes, la bobine émettrice et la bobine réceptrice étant homopolaires.
- l'antenne émettrice et l'antenne réceptrice du radar sont de l'un des types suivants : antenne radio à cornet à quadruple nervures, antenne papillon, antenne papillon rectangulaire, antenne spirale d'Archimède, antenne spirale logarithmique, antenne Vivaldi, antenne spirale logarithmique allongée suivant un quatrième axe perpendiculaire au premier axe.
- l'antenne émettrice et l'antenne réceptrice sont réalisées au moins en partie en nickel ou en chrome. Et/ou
- une partie centrale de l'antenne émettrice et de l'antenne réceptrice est réalisée en cuivre et comprend, en surface, une couche de protection réalisée en or.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

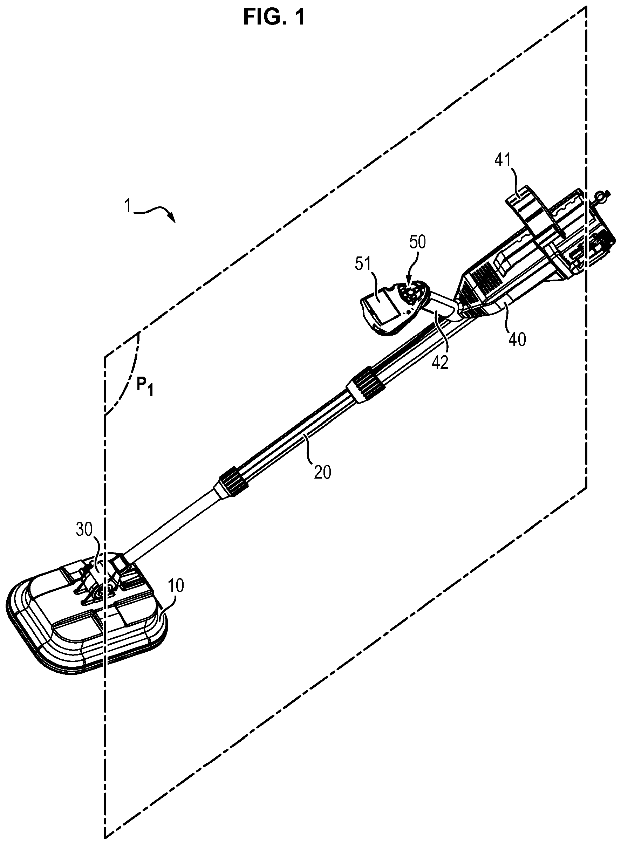

La figure 1 est une vue en perspective d'un exemple de réalisation d'un détecteur conforme à l'invention.
La figure 2 est une vue du dessus, éclatée et en perspective de la tête de détection du détecteur de la figure 1.
La figure 3 est une vue du dessous, éclatée et en perspective, de la tête de détection du détecteur de la figure 1.
La figure 4 est une vue en coupe suivant le plan P1 de la tête de détection du détecteur de la figure 1.

### DESCRIPTION DETAILLEE D'UN MODE DE REALISATION

Un détecteur 1 double technologie conforme à l'invention comprend une tête de détection 10.

La tête de détection 10 correspond à la partie destinée à venir près du sol afin de détecter des produits cibles. Elle comprend à cet effet :
- un capteur inductif 12, 13, et
- un radar à pénétration de sol 60 comprenant une antenne émettrice 61 et une antenne réceptrice 62.

Le capteur inductif 12, 13 comprend soit une bobine unique formant l'émetteur et le récepteur, soit une bobine émettrice 12 et une bobine réceptrice 13 distinctes. La bobine émettrice 12 et la bobine réceptrice forment alors chacune une boucle et sont conformées de sorte que la boucle de la bobine émettrice 12 chevauche au moins partiellement la boucle de la bobine réceptrice 13 de manière à former une zone de couplage 14. Cette configuration permet d'obtenir un capteur inductif dans lequel l'inductance mutuelle est minimale.

A titre de comparaison, par rapport à un capteur inductif comprenant une unique bobine constituant l'émetteur et le récepteur et formée de deux boucles en série de sens inversés afin de neutraliser les effets de parasites externes, l'utilisation de deux bobines 12, 13 distinctes pour la bobine émettrice 12 et la bobine réceptrice 13 permet d'amplifier le signal, et ne nécessite donc pas de diminuer le seuil de détection pour éviter les risques de fausses alarmes.

Dans ce qui suit, l'invention sera plus particulièrement décrite dans le cas où le capteur inductif comprend une bobine émettrice 12 et une bobine réceptrice 13 distinctes. Ceci n'est cependant pas limitatif, l'invention s'appliquant également dans le cas d'un capteur inductif comprenant une unique bobine.

La bobine émettrice 12 et la bobine réceptrice 13 sont des bobinages homopolaires. Elles peuvent être fixées sur une plateforme 11, qui est montée fixe dans la tête de détection 10. La boucle de la bobine émettrice 12, la zone de couplage 14 et la boucle de la bobine réceptrice 13 présentent une même direction longitudinale et s'étendent les unes à côté des autres.

De manière connue en soi, la bobine émettrice 12 et la bobine réceptrice 13 sont configurées pour émettre et recevoir des ondes ayant une fréquence comprise entre 300 Hz et 180 kHz.

L'antenne émettrice 61 et l'antenne réceptrice 62 du radar 60 sont configurées pour émettre et recevoir des ondes électromagnétiques dans le sol, par exemple à une fréquence comprise entre 100 MHz et 8 GHz. Lorsque ces ondes rencontrent des changements de milieux, une partie est renvoyée vers la surface et enregistrée par l'antenne réceptrice 62.

Afin de limiter les interactions avec les bobines émettrice et réceptrice 12, 13, une épaisseur e de l'antenne émettrice 61 et de l'antenne réceptrice 62 est inférieure à une profondeur d'absorption des ondes électromagnétiques des bobines 12, 13 de sorte que les antennes 61, 62 deviennent invisibles pour le champ magnétique du capteur inductif 12, 13. Par épaisseur, on comprendra ici la dimension des antennes suivant une direction qui est sensiblement normale au plan contenant la plateforme 11 sur laquelle sont fixées les bobines émettrice 12 et réceptrice 13.

On notera toutefois que l'épaisseur e des antennes émettrice et réceptrice 12, 13 doit rester supérieure à une épaisseur limite pour garantir une robustesse mécanique suffisante des antennes 61, 62 et éviter tout risque de casse. L'épaisseur e des antennes émettrice et réceptrice 61, 62 est donc choisie de manière à être supérieure à une centaine de nanomètres et inférieur à un micron. Par exemple, l'antenne émettrice 61 et l'antenne réceptrice 62 peuvent présenter une épaisseur e de l'ordre de 200 nm.

Afin de réaliser des antennes 61, 62 de cette épaisseur, on pourra notamment envisager une technique de dépôt physique par phase vapeur (habituellement désignée par son acronyme anglais PVD pour Physical Vapor Déposition). Cette technique permet en effet d'obtenir des antennes 61, 62 de très faible épaisseur avec une grande précision dimensionnelle et de réaliser plusieurs antennes à la fois.

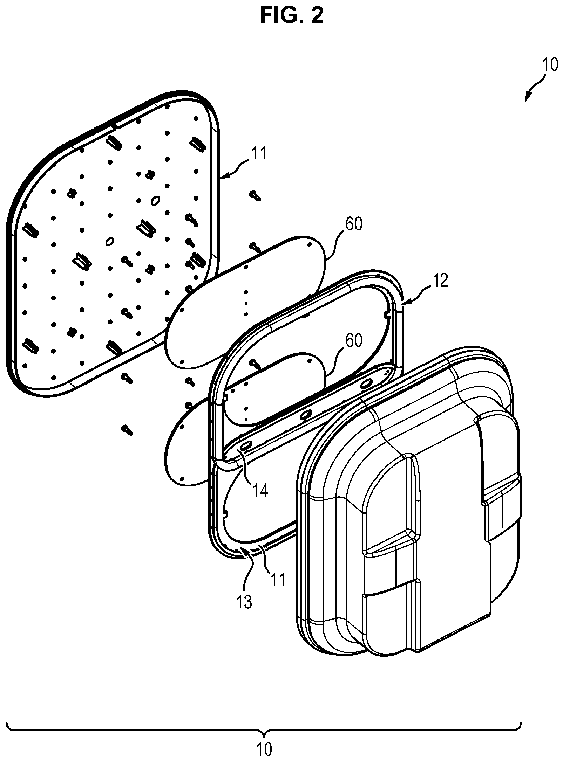

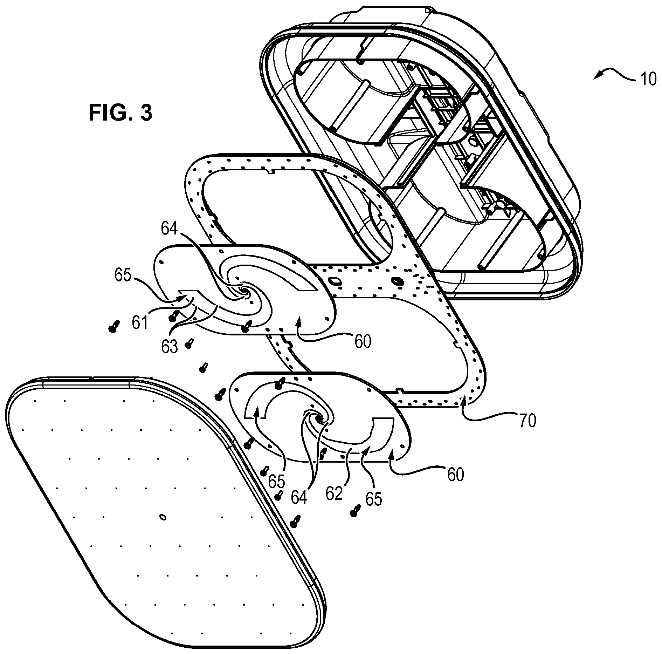

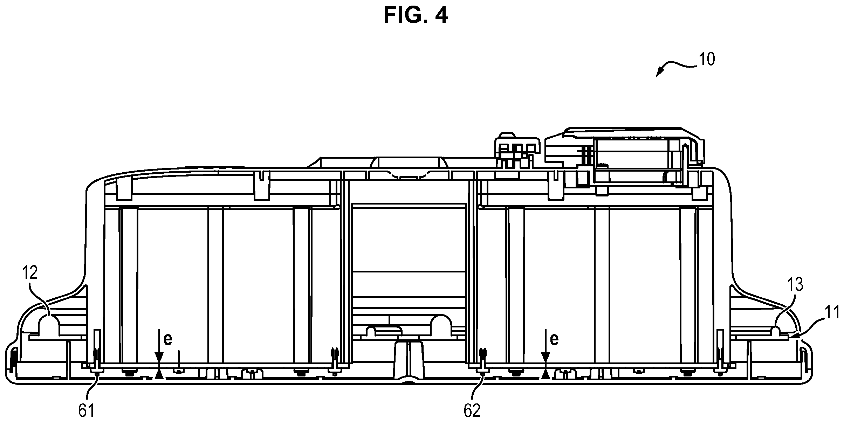

Dans une première forme de réalisation, la bobine émettrice 12 et la bobine réceptrice 13 sont imprimées directement sur la plateforme 11. La plateforme 11 et les bobines émettrice et réceptrice 12, 13 forment donc un circuit imprimé. Cette forme de réalisation présente l'avantage de réduire l'encombrement du capteur inductif dans la tête de détection 10 ainsi que le poids global du détecteur 1. Son coût n'est cependant pas négligeable. Par conséquent, dans une deuxième forme de réalisation, qui est illustrée sur les figures 2 à 4, la bobine émettrice 12 et la bobine réceptrice 13 peuvent comprendre des fils enroulés, la bobine émettrice 12 présentant un plus grand nombre de spires que la bobine réceptrice 13.

La tête de détection est fixée sur un manche 20 par l'intermédiaire d'une liaison mécanique 30. La liaison mécanique 30 peut comprendre une liaison du type encastrement, pivot ou rotule. De préférence, la liaison mécanique 30 comprend une liaison pivot.

De manière optionnelle, le détecteur 1 comprend en outre des moyens 40 pour la préhension du détecteur 1 par un opérateur. De manière habituelle, les moyens de préhension 40 peuvent comprendre un arceau 41 configuré pour recevoir à coulissement le bras de l'opérateur ainsi qu'une poignée 42 configurée pour être saisie par l'opérateur.

Le manche 20 peut être télescopique et/ou comprendre plusieurs parties distinctes configurées pour être assemblées les unes avec les autres avant d'être fixées ensemble, par exemple par vissage.

De manière connue en soi, le détecteur 1 comprend également des moyens de traitement 50 comprenant notamment un microprocesseur configuré pour traiter le signal détecté par le capteur inductif 12, 13, tel qu'une ou plusieurs cartes électroniques, une mémoire et le cas échéant des moyens d'alerte et/ou un dispositif d'affichage 51.

Les moyens de traitement 50 peuvent être logés en tout ou partie au niveau des moyens de préhension 40.

Dans une forme de réalisation, l'antenne émettrice 61 et l'antenne réceptrice 62 sont chacune logées au centre de l'une des boucles des bobines émettrice 12 et réceptrice 13. Le maximum de sensibilité du radar 60 se trouve alors dans la même zone que le maximum de sensibilité du capteur inductif, c'est-à-dire au niveau de la zone de couplage 14. En d'autres termes, les lobes de détection microondes du radar 60 et les lobes de détection magnétique du capteur inductif 12, 13 correspondent, de sorte qu'il devient possible pour un opérateur de considérer que la détection d'une cible a lieu dans la zone centrale de la tête de détection 10 lors du pointage.

Les boucles de la bobine émettrice 12 et de la bobine réceptrice 13 sont de forme allongée, c'est-à-dire qu'elles présentent une dimension dans le plan de la plateforme 11 qui est plus grande devant l'autre dimension. Lorsque l'antenne émettrice 61 et l'antenne réceptrice 62 sont chacune logées au centre de l'une des boucles des bobines émettrice 12 et réceptrice 13, les antennes 61, 62 émettrice et réceptrice 12, 13 sont également être de forme allongée suivant la plus grande dimension des boucles des bobines émettrice 12 et réceptrice 13 afin de maximiser leur surface de rayonnement et donc leur capacité de transmission. Par exemple, l'antenne émettrice 61 et l'antenne réceptrice 62 peuvent avoir la forme d'une spirale logarithmique qui a été allongée afin de maximiser la surface de rayonnement et le gain des antennes tout en minimisant la longueur de chaque brin 63 formant la spirale des antennes 61, 62 afin de ne pas augmenter l'impulsion. Dans une antenne à spirale logarithmique allongée, l'écartement entre les brins 63 de la spirale est en effet plus grand et croit de manière logarithmique. Par exemple, la spirale logarithmique allongée formant les antennes 61, 62 peut présenter une hauteur d'environ 150 cm pour 80 cm. En variante, l'antenne émettrice 61 et l'antenne réceptrice 62 du radar 60 peuvent être de l'un des types suivants : antenne radio à cornet à quadruple nervures, antenne papillon (généralement connue sous sa dénomination anglaise « bow tie »), antenne papillon rectangulaire, antenne spirale d'Archimède, antenne spirale logarithmique, antenne Vivaldi.

De manière connue en soi, l'antenne émettrice 61 et l'antenne réceptrice 62 peuvent être réalisées en cuivre, qui est un bon conducteur électrique.

Toutefois, afin réduire les risques d'oxydation des antennes, les antennes 61, 62 émettrice et réceptrice 12, 13 peuvent être en partie réalisées en nickel et/ou en chrome et en partie réalisées en cuivre. Le nickel et le chrome présentent en effet l'avantage de ne pas s'oxyder dans le temps tout en étant conducteur électriquement.

Par exemple, le centre 64 de chaque antenne 61, 62 peut être réalisé en cuivre et protégé par une couche comprenant de l'or, tandis que le reste 65 des antennes 61, 26 est réalisé en nickel et/ou en chrome. Entre la partie centrale de chaque antenne 61, 26 et le reste de l'antenne 61, 62 peut être réalisée en cuivre et recouverte d'une couche de nickel (et/ou de chrome).

## Revendications

1. Détecteur (1) double technologie comprenant une tête de détection comportant :
- un capteur inductif et
- un radar à pénétration de sol (60) comprenant une antenne émettrice (61) et une antenne réceptrice (62),
le détecteur étant **caractérisé en ce que** l'antenne émettrice (61) et l'antenne réceptrice (62) présentent une épaisseur (e) inférieure ou égale à un micron afin de limiter les interactions avec le capteur inductif (12).

2. Détecteur (1) selon la revendication 1, dans lequel l'épaisseur (e) de l'antenne émettrice (61) et de l'antenne réceptrice (62) est supérieure ou égale à une centaine de nanomètres.

3. Détecteur (1) selon l'une des revendications 1 ou 2, dans lequel l'épaisseur (e) de l'antenne émettrice (61) et de l'antenne réceptrice (62) est égale à 200 nm.

4. Détecteur (1) selon l'une des revendications 1 à 3, dans lequel le capteur inductif (12, 13) comprend une bobine émettrice (12) et une bobine réceptrice (13) distinctes, la bobine émettrice (12) et la bobine réceptrice (13) formant chacune une boucle, et l'antenne émettrice (61) et l'antenne réceptrice (62) sont chacune logées au centre de l'une des boucles des bobines émettrice (12) et réceptrice (13).

5. Détecteur selon l'une des revendications 1 à 4, dans lequel le capteur inductif (12, 13) comprend une bobine émettrice (12) et une bobine réceptrice (13) distinctes comprenant des fils enroulés, la bobine émettrice (12) présentant un plus grand nombre de spires que la bobine réceptrice (13).

6. Détecteur (1) selon l'une des revendications 1 à 4, dans lequel le capteur inductif (10) est imprimé directement sur une plateforme de sorte que la plateforme (11) forme un circuit imprimé.

7. Détecteur (1) selon l'une des revendications 1 à 6, dans lequel le capteur inductif (12, 13) comprend une bobine émettrice (12) et une bobine réceptrice (13) distinctes, la bobine émettrice (12) et la bobine réceptrice (13) étant homopolaires.

8. Détecteur (1) selon l'une des revendications 1 à 7, dans lequel l'antenne émettrice (61) et l'antenne réceptrice (62) du radar (60) sont de l'un des types suivants : antenne radio à cornet à quadruple nervures, antenne papillon, antenne papillon rectangulaire, antenne spirale d'Archimède, antenne spirale logarithmique, antenne Vivaldi, antenne spirale logarithmique allongée suivant un quatrième axe (X₄) perpendiculaire au premier axe (X₁).

9. Détecteur (1) selon la revendication 8, dans lequel l'antenne émettrice (61) et l'antenne réceptrice (62) sont réalisées au moins en partie en nickel ou en chrome.

10. Détecteur (1) selon la revendication 9, dans lequel une partie centrale de l'antenne émettrice (61) et de l'antenne réceptrice (62) est réalisée en cuivre et comprend, en surface, une couche de protection réalisée en or.

## Patentansprüche

1. Doppeldetektor (1), der einen Detektionskopf umfasst, der umfasst:
- einen induktiven Sensor und
- einen Bodenradar (60), der eine Sendeantenne (61) und eine Empfangsantenne (62) umfasst,
wobei der Detektor **dadurch gekennzeichnet ist, dass** die Sendeantenne (61) und die Empfangsantenne (62) eine Dicke (e) aufweisen, die kleiner oder gleich ein Mikrometer ist, um die Interaktionen mit dem induktiven Sensor (12) zu begrenzen.

2. Detektor (1) nach Anspruch 1, wobei die Dicke (e) der Sendeantenne (61) und der Empfangsantenne (62) größer oder gleich ein Hundertstel Nanometer ist.

3. Detektor (1) nach einem der Ansprüche 1 oder 2, wobei die Dicke (e) der Sendeantenne (61) und der Empfangsantenne (62) gleich 200 nm ist.

4. Detektor (1) nach einem der Ansprüche 1 bis 3, wobei der induktive Sensor (12, 13) eine Sendespule (12) und eine Empfangsspule (13) umfasst, die getrennt sind, wobei die Sendespule (12) und die Empfangsspule (13) jeweils eine Schleife bilden und die Sendeantenne (61) und die Empfangsantenne (62) jeweils in der Mitte einer der Schleifen von der Sende- (12) und Empfangsspule (13) untergebracht sind.

5. Detektor nach einem der Ansprüche 1 bis 4, wobei der induktive Sensor (12, 13) eine Sendespule (12) und eine Empfangsspule (13) umfasst, die getrennt sind und aufgewickelte Drähte umfassen, wobei die Sendespule (12) eine größere Anzahl an Windungen aufweist als die Empfangsspule (13).

6. Detektor (1) nach einem der Ansprüche 1 bis 4, wobei der induktive Sensor (10) direkt auf einer Plattform gedruckt ist, derart, dass die Plattform (11) eine gedruckte Schaltung bildet.

7. Detektor (1) nach einem der Ansprüche 1 bis 6, wobei der induktive Sensor (12, 13) eine Sendespule (12) und eine Empfangsspule (13) umfasst, die getrennt sind, wobei die Sendespule (12) und die Empfangsspule (13) gleichpolig sind.

8. Detektor (1) nach einem der Ansprüche 1 bis 7, wobei die Sendeantenne (61) und die Empfangsantenne (62) des Radars (60) von einem der folgenden Typen sind: Hornfunkantenne mit Vierfachrippen, Schmetterlingsantenne, rechteckige Schmetterlingsantenne, archimedische Spiralantenne, logarithmische Spiralantenne, Vivaldi-Antenne, entlang einer vierten Achse (X₄) senkrecht zur ersten Achse (X₁) längliche logarithmische Spiralantenne.

9. Detektor (1) nach Anspruch 8, wobei die Sendeantenne (61) und die Empfangsantenne (62) zumindest teilweise aus Nickel oder aus Chrom hergestellt sind.

10. Detektor (1) nach Anspruch 9, wobei ein mittlerer Teil der Sendeantenne (61) und der Empfangsantenne (62) aus Kupfer hergestellt ist und an der Oberfläche eine aus Gold hergestellte Schutzschicht umfasst.

## Claims

1. A dual detector (1) comprising a detection head including:
- an inductive sensor, and
- a ground-penetrating radar (60) comprising a transmitting antenna (61) and a receiving antenna (62), the detector being **characterized in that** the transmitting antenna (61) and the receiving antenna (62) have a thickness (e) less than or equal to one micron in order to limit the interactions with the inductive sensor (12).

2. The detector (1) according to claim 1, wherein the thickness (e) of the transmitting antenna (61) and the receiving antenna (62) is greater than or equal to one hundred nanometers.

3. The detector (1) according to any of claims 1 or 2, wherein the thickness (e) of the transmitting antenna (61) and of the receiving antenna (62) is equal to 200 nm.

4. The detector (1) according to any of claims 1 to 3, wherein the inductive sensor (12, 13) comprises a transmitting coil (12) and a receiving coil (13) distinct from each other, the transmitting coil (12) and the receiving coil (13) each forming a loop, and the transmitting antenna (61) and the receiving antenna (62) are each housed in the center of one of the loops of the transmitting (12) and receiving (13) coils.

5. The detector according to any of claims 1 to 4, wherein the inductive sensor (12, 13) comprises a transmitting coil (12) and a receiving coil (13) distinct from each other comprising wound wires, the transmitting coil (12) having a greater number of turns than the receiving coil (13).

6. The detector (1) according to any of claims 1 to 4, wherein the inductive sensor (10) is printed directly on a platform so that the platform (11) forms a printed circuit.

7. The detector (1) according to any of claims 1 to 6, wherein the inductive sensor (12, 13) comprises a transmitting coil (12) and a receiving coil (13) distinct from each other, the transmitting coil (12) and the receiving coil (13) being homopolar.

8. The detector (1) according to any of claims 1 to 7, wherein the transmitting antenna (61) and the receiving antenna (62) of the radar (60) are of one of the following types: quad-ridged horn radio antenna, bow tie antenna, rectangular bow tie antenna, Archimedean spiral antenna, logarithmic spiral antenna, Vivaldi antenna, logarithmic spiral antenna elongated along a fourth axis (X₄) perpendicular to the first axis (X₁).

9. The detector (1) according to claim 8, wherein the transmitting antenna (61) and the receiving antenna (62) are made at least partly of nickel or chromium.

10. The detector (1) according to claim 9, wherein a central part of the transmitting antenna (61) and of the receiving antenna (62) is made of copper and comprises, on the surface, a protective layer made of gold.
